# EUROPEAN PATENT APPLICATION

(11) **EP 4 796 365 A1**
(43) Date of publication of application: **26.08.2026**
(21) Application number: 24896444.7
(22) Date of filing: 22.11.2024
(51) Int. Cl.: B60L 3/00, B60L 53/00, H02J 7/00, B60L 58/18

(54) **ELECTRIC VEHICLE CONTROL SYSTEM, AND ELECTRIC VEHICLE**

(30) Priority: 28.11.2023 CN 202311614409
(71) Applicant: BYD Company Limited, Shenzhen, Guangdong 518118 (CN)
(72) Inventor: YAN, Lei, Shenzhen, Guangdong 518118 (CN); GAO, Wen, Shenzhen, Guangdong 518118 (CN); LI, Tao, Shenzhen, Guangdong 518118 (CN); SUN, Zhengyang, Shenzhen, Guangdong 518118 (CN)
(74) Representative: Taor, Simon Edward William
(86) International application number: PCT/CN2024/134015
(87) International publication number: WO 2025/113353

(57) **Abstract**

An electric vehicle is provided. The electric vehicle includes an electric vehicle control system. The control system includes a charging module, a drive motor, and a control module. The charging module is separately connected to a plurality of battery packs of the electric vehicle. The drive motor is connected to the plurality of battery packs. The control module is separately connected to the plurality of battery packs, the drive motor, and the charging module, and is configured to: when some battery packs in the plurality of battery packs are faulty, control the faulty battery packs to be isolated, and control the charging module and/or the drive motor to charge a non-faulty battery pack.

## Description

### CROSS REFERENCE TO RELATED APPLICATIONS

This application claims priority to Chinese Patent Application No. 202311614409.8, filed with the China National Intellectual Property Administration on November 28, 2023 and entitled "ELECTRIC VEHICLE CONTROL SYSTEM AND ELECTRIC VEHICLE", which is incorporated herein by reference in its entirety.

### TECHNICAL FIELD

This application relates to the field of vehicle technologies, and in particular, to an electric vehicle control system and an electric vehicle.

### BACKGROUND

For a current electric vehicle that includes two or more battery packs, the plurality of battery packs are connected in series. In a charging manner of the electric vehicle, all battery packs in a power system are usually charged in a direct current or alternating current manner. When some of the battery packs are faulty, the faulty battery packs are equivalent to an open circuit, causing the entire power battery system to be faulty. Therefore, another non-faulty battery pack cannot operate, for example, cannot continue to provide driving force to the vehicle and cannot be charged or discharged. In this case, the electric vehicle loses power, the vehicle cannot travel normally, and a case such as a breakdown of the vehicle may occur. Consequently, an endurance capability of the electric vehicle is affected, safety redundancy performance and reliability of the vehicle are reduced, and there is an increase in potential safety risks in a traveling process of the electric vehicle, resulting in reduced driving safety.

### SUMMARY

This application is intended to resolve at least one of technical problems in the conventional technology.

Therefore, an objective of this application is to provide an electric vehicle control system. The electric vehicle control system adjusts a circuit structure of a power system of an electric vehicle, so that when some battery packs are faulty, another non-faulty battery pack may continue to be charged without being affected, thereby resolving a problem that when some battery packs are faulty, another non-faulty battery pack cannot be charged and cannot operate.

Therefore, a second objective of this application is to provide an electric vehicle.

To achieve the foregoing objective, an embodiment of a first aspect of this application discloses an electric vehicle control system, including: a charging module, the charging module being separately connected to a plurality of battery packs of an electric vehicle; a drive motor, connected to the plurality of battery packs; and a control module, the control module being separately connected to the plurality of battery packs, the drive motor, and the charging module, and being configured to: when some battery packs in the plurality of battery packs are faulty, control the faulty battery packs to be isolated, and control the charging module and/or the drive motor to charge a non-faulty battery pack.

According to the electric vehicle control system in this embodiment of this application, when some battery packs in the plurality of battery packs are faulty, the control module controls the faulty battery packs to be isolated, and controls the charging module and/or the drive motor to charge the non-faulty battery pack. Therefore, in this application, a circuit structure of a power system of the electric vehicle is adjusted, so that when some battery packs are faulty, another non-faulty battery pack may continue to be charged without being affected, thereby resolving a problem that when some battery packs are faulty, another non-faulty battery pack cannot be charged and cannot operate.

In addition, the electric vehicle control system according to the foregoing embodiment of this application may further have the following additional technical features.

In some embodiments, when some battery packs in the plurality of battery packs are faulty, the faulty battery packs are controlled to be isolated, and the non-faulty battery pack is controlled to supply power to the drive motor.

In some embodiments, the control module is further configured to: when none of the plurality of battery packs is faulty, control state of charge balancing among the plurality of battery packs.

In some embodiments, the charging module includes an alternating current charging unit and a direct current charging unit. The plurality of battery packs are separately connected to the alternating current charging unit and the direct current charging unit. When each battery pack is not faulty, the control module controls the alternating current charging unit or the direct current charging unit to charge the battery pack.

In some embodiments, the plurality of battery packs include: a first battery pack, a positive electrode of the first battery pack being separately connected to a high-voltage electrical load of the electric vehicle and the control module through a first positive contactor, the positive electrode of the first battery pack being further connected to a positive electrode of the direct current charging unit through the first positive contactor and a first contactor, and a negative electrode of the first battery pack being connected to the high-voltage electrical load through a second contactor; and a second battery pack, a positive electrode of the second battery pack being connected to the negative electrode of the first battery pack, the positive electrode of the second battery pack being further connected to a positive electrode of the alternating current charging unit through the second contactor, a negative electrode of the second battery pack being connected to a negative electrode of the alternating current charging unit through a first negative contactor, and the negative electrode of the second battery pack being further connected to a negative electrode of the direct current charging unit through the first negative contactor and a second negative contactor. The control module is separately connected to the first positive contactor and the first negative contactor, and is configured to control on/off of the first positive contactor and the first negative contactor.

In some embodiments, the electric vehicle control system further includes a third contactor. One end of the third contactor is separately connected to the negative electrode of the first battery pack and the positive electrode of the second battery pack, and the one end of the third contactor is further connected to the positive electrode of the alternating current charging unit through the second contactor. The other end of the third contactor is connected to the drive motor, and the other end of the third contactor is further connected to the positive electrode of the direct current charging unit through a fourth contactor.

In some embodiments, the electric vehicle control system further includes: a fifth contactor, the one end of the fifth contactor being separately connected to the one end of the third contactor, the negative electrode of the first battery pack, and the positive electrode of the second battery pack, the other end of the fifth contactor being further connected to the positive electrode of the first battery pack through the first positive contactor, and the other end of the fifth contactor being further connected to the positive electrode of the direct current charging unit through the first contactor; and a sixth contactor, the one end of the sixth contactor being separately connected to the one end of the fifth contactor, the one end of the third contactor, the negative electrode of the first battery pack, and the positive electrode of the second battery pack, the other end of the sixth contactor being connected to the negative electrode of the alternating current charging unit, and the other end of the sixth contactor being further connected to the negative electrode of the direct current charging unit through the second negative contactor.

In some embodiments, the control module includes a control unit and a switching transistor unit. The switching transistor unit is connected to the drive motor. The control unit is configured to control an on/off state of the switching transistor unit.

In some embodiments, the switching transistor unit includes: an upper bridge switching unit, the upper bridge switching unit including a first IGBT (Insulated Gate Bipolar Transistor, insulated gate bipolar transistor) component, a second IGBT component, and a third IGBT component; and a lower bridge switching unit, the lower bridge switching unit including a fourth IGBT component, a fifth IGBT component, and a sixth IGBT component. A first terminal of the first IGBT component is connected to the positive electrode of the first battery pack through the first positive contactor, the first terminal of the first IGBT component is further connected to the positive electrode of the direct current charging unit through the first contactor, a second terminal of the first IGBT component is connected to a first terminal of the fourth IGBT component, and a third terminal of the first IGBT component is connected to the control unit.

A first terminal of the second IGBT component is connected to the first terminal of the first IGBT component, the first terminal of the second IGBT component is further connected to the positive electrode of the first battery pack through the first positive contactor, the first terminal of the second IGBT component is further connected to the positive electrode of the direct current charging unit through the first contactor, a second terminal of the second IGBT component is connected to a first terminal of the fifth IGBT component, and a third terminal of the second IGBT component is connected to the control unit.

A first terminal of the third IGBT component is separately connected to the first terminal of the first IGBT component and the first terminal of the second IGBT component, the first terminal of the third IGBT component is further connected to the positive electrode of the first battery pack through the first positive contactor, the first terminal of the third IGBT component is further connected to the positive electrode of the direct current charging unit through the first contactor, a second terminal of the third IGBT component is connected to a first terminal of the sixth IGBT component, and a third terminal of the third IGBT component is connected to the control unit.

A second terminal of the fourth IGBT component is connected to the negative electrode of the alternating current charging unit, the second terminal of the fourth IGBT component is further connected to the negative electrode of the second battery pack through the first negative contactor, the second terminal of the fourth IGBT component is further connected to the negative electrode of the direct current charging unit through the second negative contactor, and a third terminal of the fourth IGBT component is connected to the control unit.

A second terminal of the fifth IGBT component is connected to the second terminal of the fourth IGBT component, the second terminal of the fifth IGBT component is further connected to the negative electrode of the second battery pack through the first negative contactor, the second terminal of the fifth IGBT component is further connected to the negative electrode of the direct current charging unit through the second negative contactor, and a third terminal of the fifth IGBT component is connected to the control unit.

A second terminal of the sixth IGBT component is separately connected to the second terminal of the fourth IGBT component and the second terminal of the fifth IGBT component, the second terminal of the sixth IGBT component is further connected to the negative electrode of the second battery pack through the first negative contactor, the second terminal of the sixth IGBT component is further connected to the negative electrode of the direct current charging unit through the second negative contactor, and a third terminal of the sixth IGBT component is connected to the control unit.

In some embodiments, the drive motor includes: a first inductor, one end of the first inductor being separately connected to the second terminal of the first IGBT component and the first terminal of the fourth IGBT component, the other end of the first inductor being connected to the other end of the third contactor, and the other end of the first inductor being further connected to the positive electrode of the direct current charging unit through the fourth contactor; a second inductor, one end of the second inductor being separately connected to the second terminal of the second IGBT component and the first terminal of the fifth IGBT component, the other end of the second inductor being separately connected to the other end of the third contactor and the other end of the first inductor, and the other end of the second inductor being further connected to the positive electrode of the direct current charging unit through the fourth contactor; and a third inductor, one end of the third inductor being separately connected to the second terminal of the third IGBT component and the first terminal of the sixth IGBT component, the other end of the third inductor being separately connected to the other end of the third contactor, the other end of the first inductor, and the other end of the second inductor, and the other end of the third inductor being further connected to the positive electrode of the direct current charging unit through the fourth contactor.

In some embodiments, the electric vehicle control system further includes a first pre-charging unit. The first pre-charging unit is connected in parallel to the first positive contactor.

In some embodiments, the first pre-charging unit includes a first resistor and a seventh contactor that are connected in series.

In some embodiments, the electric vehicle control system further includes a second pre-charging unit. The second pre-charging unit is connected in parallel to the second contactor.

In some embodiments, the second pre-charging unit includes a second resistor and an eighth contactor that are connected in series.

In some embodiments, the electric vehicle control system further includes a first capacitor. One end of the first capacitor is connected to the first terminal of the first IGBT component, and the other end of the first capacitor is connected to the second terminal of the fourth IGBT component.

In some embodiments, the electric vehicle control system further includes a second capacitor. The second capacitor is connected in parallel to the direct current charging unit.

In some embodiments, the control unit is configured to: when the first battery pack is faulty and the second battery pack is not faulty, control the first battery pack to be isolated, and control the first negative contactor to be closed, to charge the second battery pack through the alternating current charging unit; or when the second battery pack is faulty and the first battery pack is not faulty, control the second battery pack to be isolated, control the second contactor and the third contactor to be closed, control the upper bridge switching unit to be open, and control the lower bridge switching unit to be closed, to charge the first inductor, the second inductor, and the third inductor through the alternating current charging unit, and when charging ends, control the upper bridge switching unit to be closed, control the lower bridge switching unit to be open, control the second contactor to be open, and control the first positive contactor and the third contactor to be closed, to charge the first battery pack through the first inductor, the second inductor, and the third inductor.

In some embodiments, the control unit is configured to: when the first battery pack is faulty and the second battery pack is not faulty, control the first battery pack to be isolated, and control the first negative contactor, the second negative contactor, the third contactor, and the fourth contactor to be closed, to charge the second battery pack through the direct current charging unit; or when the second battery pack is faulty and the first battery pack is not faulty, control the second battery pack to be isolated, control the first contactor, the first positive contactor, the third contactor, and the second negative contactor to be closed, control the fourth contactor to be open, control the upper bridge switching unit to be open, and control at least one IGBT component in the lower bridge switching unit to be closed, to charge the first battery pack through the direct current charging unit.

In some embodiments, the control unit is configured to: when the first battery pack is faulty, control the first battery pack to be isolated, and control the first negative contactor and the fifth contactor to be closed, to supply power to the drive motor through the second battery pack; or when the second battery pack is faulty, control the second battery pack to be isolated, and control the first positive contactor and the sixth contactor to be closed, to supply power to the drive motor through the first battery pack.

In an embodiment, the control unit is configured to control the first positive contactor to be open, to isolate the first battery pack.

In some embodiments, the control unit is configured to control the first negative contactor to be open, to isolate the second battery pack.

In some embodiments, the control unit is configured to: when neither the first battery pack nor the second battery pack is faulty, control a battery pack with a higher state of charge to charge a battery pack with a lower state of charge in the first battery pack and the second battery pack, to implement state of charge balancing.

In some embodiments, the control unit is configured to: when a state of charge of the second battery pack is greater than a state of charge of the first battery pack, control the first positive contactor to be open, control the first negative contactor and the third contactor to be closed, control the upper bridge switching unit to be open, and control the lower bridge switching unit to be closed, to charge the first inductor, the second inductor, and the third inductor through the second battery pack; and after charging of the first inductor, the second inductor, and the third inductor ends, control the first positive contactor and the third contactor to be closed, control the first negative contactor to be open, control the upper bridge switching unit to be closed, and control the lower bridge switching unit to be open, to charge the first battery pack through the first inductor, the second inductor, and the third inductor.

In some embodiments, the control unit is configured to: when the state of charge of the first battery pack is greater than the state of charge of the second battery pack, control the first positive contactor, the first contactor, the fourth contactor, and the sixth contactor to be closed, control the first negative contactor to be open, control the upper bridge switching unit to be open, and control the lower bridge switching unit to be closed, to charge the first inductor, the second inductor, and the third inductor through the first battery pack; and after charging of the first inductor, the second inductor, and the third inductor ends, control the first positive contactor to be open, control the first negative contactor, the third contactor, the fifth contactor, and the sixth contactor to be closed, control the upper bridge switching unit to be closed, and control the lower bridge switching unit to be open, to charge the second battery pack through the first inductor, the second inductor, and the third inductor.

In some embodiments, before controlling the battery pack with a higher state of charge to charge the battery pack with a lower state of charge in the first battery pack and the second battery pack, the control unit is further configured to control the charging module to charge the battery pack with a higher state of charge in the first battery pack and the second battery pack, until the battery pack with a higher state of charge in the first battery pack and the second battery pack is fully charged.

To achieve the foregoing objective, an embodiment of a second aspect of this application discloses an electric vehicle, including the electric vehicle control system described in the embodiment of the first aspect of this application.

According to the electric vehicle in this embodiment of this application, when some battery packs in a plurality of battery packs are faulty, a control module controls the faulty battery packs to be isolated, and controls a charging module and/or a drive motor to charge a non-faulty battery pack. Therefore, in this application, a circuit structure of a power system of the electric vehicle is adjusted, so that when some battery packs are faulty, another non-faulty battery pack may continue to be charged without being affected, thereby resolving a problem that when some battery packs are faulty, another non-faulty battery pack cannot be charged and cannot operate.

Some of additional aspects and advantages of this application are provided in the following descriptions, and some of the additional aspects and advantages become clear from the following descriptions or are learned from practice of this application.

### BRIEF DESCRIPTION OF DRAWINGS

The foregoing and/or additional aspects and advantages of this application are clear and easily understood from the descriptions of the embodiments provided with reference to the following accompanying drawings.
FIG. 1 is a structural block diagram of an electric vehicle control system according to an embodiment of this application;
FIG. 2 is a schematic diagram of an electric vehicle control system according to an embodiment of this application;
FIG. 3 is a schematic circuit diagram of alternating current charging of a second battery pack according to an embodiment of this application;
FIG. 4 is a schematic circuit diagram of charging a three-phase inductor in a drive motor according to an embodiment of this application;
FIG. 5 is a schematic circuit diagram of charging a first battery pack through freewheeling of a three-phase inductor in a drive motor according to an embodiment of this application;
FIG. 6 is a schematic circuit diagram of direct current charging of a second battery pack according to an embodiment of this application;
FIG. 7 is a schematic circuit diagram of direct current charging of a first battery pack according to a specific embodiment of this application;
FIG. 8 is a schematic diagram of a drive circuit when a first battery pack is faulty according to an embodiment of this application;
FIG. 9 is a schematic diagram of a drive circuit when a second battery pack is faulty according to an embodiment of this application;
FIG. 10 is a schematic circuit diagram of charging an inductor in a drive motor through a second battery pack according to an embodiment of this application;
FIG. 11 is a schematic circuit diagram of charging a first battery pack through freewheeling of an inductor in a drive motor according to an embodiment of this application;
FIG. 12 is a schematic circuit diagram of charging an inductor in a drive motor through a first battery pack according to an embodiment of this application;
FIG. 13 is a schematic circuit diagram of charging a second battery pack through freewheeling of an inductor in a drive motor according to an embodiment of this application;
FIG. 14 is a schematic circuit diagram of charging a second battery pack according to an embodiment of this application; and
FIG. 15 is a structural block diagram of an electric vehicle according to an embodiment of this application.

### Reference signs:

200: electric vehicle; 100: electric vehicle control system;
120: charging module; 130: drive motor; 140: control module; 150: alternating current charging unit; 160: direct current charging unit; 170: switching transistor unit; 180: first pre-charging unit; 190: second pre-charging unit; 171: upper bridge switching unit; 172: lower bridge switching unit;
U1: first battery pack; U2: second battery pack; Y1: high-voltage electrical load;
F1: first negative contactor; F2: second negative contactor; F3: first positive contactor;
C1: first capacitor; C2: second capacitor;
K1: first contactor; K2: second contactor; K3: third contactor; K4: fourth contactor; K5: fifth contactor; K6: sixth contactor; K7: seventh contactor; K8: eighth contactor;
R1: first resistor; R2: second resistor;
Q1: first IGBT component; Q2: second IGBT component; Q3: third IGBT component; Q4: fourth IGBT component; Q5: fifth IGBT component; Q6: sixth IGBT component;
L1: first inductor; L2: second inductor; and L3: third inductor.

### DESCRIPTION OF EMBODIMENTS

The following describes embodiments of this application in detail. The embodiments described with reference to the accompanying drawings are examples.

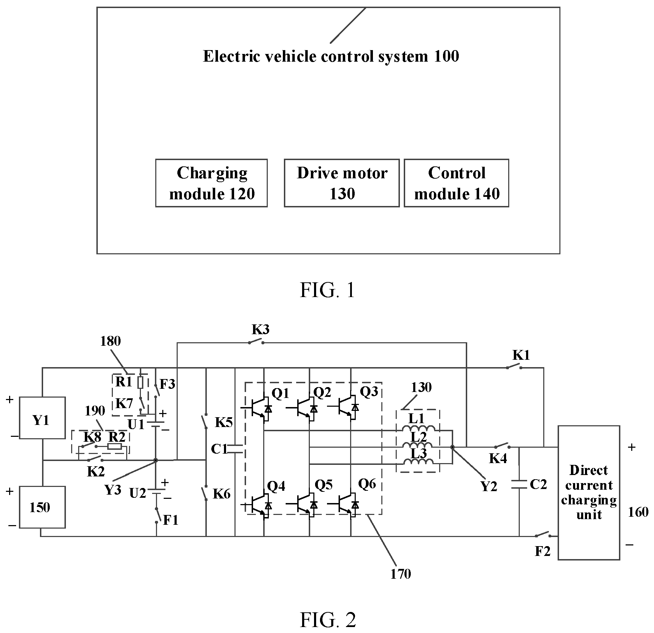

The following describes an electric vehicle control system 100 and an electric vehicle 200 according to embodiments of this application with reference to FIG. 1 to FIG. 15.

FIG. 1 is a schematic diagram of an electric vehicle control system 100 according to an embodiment of this application. As shown in FIG. 1, the electric vehicle control system 100 in this application mainly includes a charging module 120, a drive motor 130, and a control module 140.

In this embodiment, an electric vehicle includes a plurality of battery packs, and the plurality of battery packs are connected in series. The plurality of battery packs connected in series supply power to a drive system of the electric vehicle, to provide power to the electric vehicle. The plurality of battery packs are connected together to provide power to the vehicle, so that safety redundancy of the electric vehicle can be implemented, a capacity of a power battery system can be increased, and an endurance time of the vehicle can be improved.

In this embodiment, the charging module 120 is separately connected to the plurality of battery packs of the electric vehicle. Specifically, the charging module 120 is separately connected to the plurality of battery packs. When some battery packs in a plurality of battery packs of a power battery are faulty, a remaining non-faulty battery pack may be charged through the connected charging module 120, to continue to provide power to the vehicle. For example, if the vehicle travels on a freeway, when a plurality of battery packs or a single battery pack is faulty, the remaining non-faulty battery pack may continue to provide power to the vehicle through the connected charging module 120, thereby avoiding a problem that power cannot be provided to a high-voltage system in a traveling process of the vehicle because of disconnection of a plurality of battery packs or a single battery pack, and consequently the vehicle breaks down.

In this embodiment, the drive motor 130 is connected to the plurality of battery packs, to drive the electric vehicle to travel, that is, provide driving force to the electric vehicle.

In this embodiment, the control module 140 is separately connected to the plurality of battery packs, the drive motor 130, and the charging module 120, and is configured to: when some battery packs in the plurality of battery packs are faulty, control the faulty battery packs to be isolated, and control the charging module 120 and/or the drive motor 130 to charge a non-faulty battery pack. Specifically, when a single battery pack in the plurality of battery packs of the power battery is faulty, the control module 140 may control the faulty battery pack to be isolated. Because the charging module 120 is separately connected to the plurality of battery packs, the control module 140 may control the remaining non-faulty battery pack to be charged through the connected charging module 120, to continue to provide power to the vehicle, thereby avoiding a problem that when some battery packs are faulty, the charging module 120 cannot charge the remaining non-faulty battery pack, and consequently the remaining non-faulty battery pack cannot provide power to the vehicle, and the vehicle breaks down. For example, if the vehicle travels on a freeway, when some battery packs in the plurality of battery packs are faulty, the remaining non-faulty battery pack may be controlled to be charged through the connected charging module 120, to continue to provide power to the vehicle, thereby resolving a problem that when some battery packs are faulty, another non-faulty battery pack cannot be charged and cannot operate. This ensures endurance of the vehicle in a short time, reduces a breakdown risk of the vehicle, improves safety redundancy performance and reliability of the vehicle, and reduces a potential safety risk caused due to a breakdown in a traveling process of the vehicle, thereby improving driving safety.

Therefore, in this embodiment of this application, when some battery packs in the plurality of battery packs of the electric vehicle are faulty, the faulty battery packs are controlled to be isolated, and the charging module 120 and/or the drive motor 130 are/is controlled to charge the non-faulty battery pack. Therefore, in this application, a circuit structure of a power system of the electric vehicle is adjusted, so that when some battery packs are faulty, another non-faulty battery pack may continue to be charged without being affected, thereby resolving a problem that when some battery packs are faulty, another non-faulty battery pack cannot be charged and cannot operate. This ensures endurance of the vehicle in a short time, reduces a breakdown risk of the vehicle, improves safety redundancy performance and reliability of the vehicle, and reduces a potential safety risk during driving, thereby improving driving safety of the vehicle.

In an embodiment of this application, the control module 140 is further configured to: when some battery packs in the plurality of battery packs are faulty, control the faulty battery packs to be isolated, and control the non-faulty battery pack to supply power to the drive motor 130.

In this embodiment, when some battery packs in the plurality of battery packs are faulty, the control module 140 may control the faulty battery packs to be isolated, and control the non-faulty battery pack to supply power to the drive motor 130, to ensure that the vehicle can continue to travel, avoid a breakdown of the vehicle, and improve an endurance capability and reliability of the vehicle. Specifically, the plurality of battery packs are connected in series, and the control module 140 is separately connected to the plurality of battery packs. When some battery packs are faulty, the control module 140 isolates the faulty battery packs, and controls the non-faulty battery pack to supply power to the drive motor 130, so that the drive motor 130 can continue to provide driving force to the vehicle, to continue to drive the electric vehicle to travel, thereby avoiding a problem that the vehicle breaks down in a traveling process of the vehicle because some battery packs are faulty and disconnected. When some battery packs are faulty, the faulty battery packs are isolated, to ensure that the remaining non-faulty battery pack operates normally, thereby resolving a problem of endurance of the vehicle in a short time.

In an embodiment of this application, the control module 140 is further configured to: when none of the plurality of battery packs is faulty, control state of charge balancing among the plurality of battery packs.

In this embodiment, when none of all the battery packs in the electric vehicle control system 100 is faulty, that is, all the battery packs operate normally, state of charge balancing is controlled among the plurality of battery packs. For example, the electric vehicle control system 100 includes two battery packs. When both the two battery packs are non-faulty battery packs, if states of charge of the two battery packs are inconsistent, the control module 140 may control state of charge balancing between the two battery packs, thereby prolonging a service life of each battery pack.

Therefore, according to the electric vehicle control system 100, when some battery packs in the plurality of battery packs are faulty, the control module 140 controls the faulty battery packs to be isolated, controls the charging module 120 and/or the drive motor 130 to charge the non-faulty battery pack, and may control the non-faulty battery pack to supply power to the drive motor 130, to provide power to the vehicle. Therefore, in this application, a circuit structure of a power system of the electric vehicle is adjusted, so that when some battery packs are faulty, another non-faulty battery pack may continue to be charged without being affected, thereby resolving a problem that when some battery packs are faulty, another non-faulty battery pack cannot be charged and cannot operate. This ensures endurance of the vehicle in a short time, reduces a breakdown risk of the vehicle, improves safety redundancy performance and reliability of the vehicle, and reduces a potential safety risk during driving, thereby improving driving safety of the vehicle. In addition, state of charge balancing may be controlled between two battery packs, thereby prolonging a service life of each battery pack.

FIG. 2 is a schematic diagram of an electric vehicle control system 100 according to a specific embodiment of this application. The system includes a first battery pack U1, a second battery pack U2, an alternating current charging unit 150, a direct current charging unit 160, a switching transistor unit 170, a first pre-charging unit 180, a second pre-charging unit 190, a high-voltage electrical load Y1, and a control unit (not shown in the figure).

A negative electrode of the high-voltage electrical load Y1 is connected to a positive electrode of the alternating current charging unit 150, a positive electrode of the high-voltage electrical load Y1 is connected to a positive electrode of the direct current charging unit 160 through a first contactor K1, and a negative electrode of the alternating current charging unit 150 is connected to a negative electrode of the direct current charging unit 160 through a second negative contactor F2. A positive electrode of the first battery pack U1 is connected to the positive electrode of the high-voltage electrical load Y1 through a first positive contactor F3, and then is connected to the positive electrode of the direct current charging unit 160 through the first contactor K1. A positive electrode of the second battery pack U2 is connected to the positive electrode of the alternating current charging unit 150 through a second contactor K2, and a negative electrode of the second battery pack U2 is connected to the negative electrode of the direct current charging unit 160 through the second negative contactor F2. As shown in FIG. 2, a first capacitor C1 is connected in parallel to a third contactor K3 and a sixth contactor K6 that are connected in series, is connected in parallel to the first battery pack U1 and the second battery pack U2 that are connected in series, and is connected in parallel to the switching transistor unit 170. One end of the switching transistor unit 170 is connected to the control unit (not shown in the figure), and the other end is connected to the drive motor 130. The other end of the drive motor 130 is connected to the positive electrode of the direct current charging unit 160 through a fourth contactor K4. The direct current charging unit 160 is connected in parallel to a second capacitor C2.

In a specific embodiment, the high-voltage electrical load Y1 includes, for example, but is not limited to a compressor, a PTC (Positive Temperature Coefficient, positive temperature coefficient) thermistor, a drive motor, or the like.

In a specific embodiment, the alternating current charging unit 150 includes, for example, a DC/OBC (Direct Current, direct current converter/On-board charger, on-board charger).

Specifically, in the electric vehicle control system 100, the power battery is divided into two battery packs: the first battery pack U1 and the second battery pack U2. The drive system is powered by the entire power battery at a full voltage, and another high-voltage electrical load is powered by a single battery pack, namely, the first battery pack U1 or the second battery pack U2. This is determined based on a specific situation in a start process of the vehicle. A midpoint of a connection line between the first battery pack U1 and the second battery pack U2 is denoted as a midpoint Y3 of a connection line of the power battery. An N wire (for example, a conducting wire or a neutral wire) is added between the midpoint Y3 of the connection line of the power battery and a midpoint Y2 of an intersection point of a three-phase inductor in the drive motor 130. In FIG. 2, the N wire is a line connecting the midpoint Y3 of the connection line of the power battery to the intersection point Y2 of the three-phase inductor in the drive motor 130 through a fifth contactor K5. Through addition of an N wire, it may be ensured that when only some of the battery packs of the vehicle are faulty, the control module 140 may quickly isolate the battery packs in which faulty parts are located, to ensure that the high-voltage electrical load Y1 continues to operate. For example, if the vehicle travels on a freeway, when the first battery pack U1 is faulty, the control module 140 quickly isolates the first battery pack U1, and the charging module 120 may continue to supply power to the non-faulty second battery pack U2. In this case, the power battery of the electric vehicle supplies power to the second battery pack U2, and the drive motor 130 may continue to drive the electric vehicle to travel, thereby ensuring that the high-voltage electrical load Y1 of the vehicle continues to operate. If it is detected, in a traveling process, that the non-faulty second battery pack U2 is in a power-deficient condition, the non-faulty second battery pack U2 is charged through the N wire and the drive motor 130, thereby avoiding a breakdown of the vehicle in the traveling process, and ensuring driving safety and endurance of the vehicle battery. If the two battery packs, namely, the first battery pack U1 and the second battery pack U2, are intact and both are non-faulty battery packs, when states of charge of the two battery packs are inconsistent, the system may store energy for the vehicle through the N wire and the drive motor 130, so that state of charge balancing is implemented between the states of charge of the two battery packs, thereby prolonging a service life of each battery pack and safety and reliability of the vehicle.

Specifically, in an embodiment of this application, as shown in FIG. 2, the charging module 120 includes the alternating current charging unit 150 and the direct current charging unit 160. The plurality of battery packs are separately connected to the alternating current charging unit 150 and the direct current charging unit 160. When each battery pack is not faulty, the control module controls the alternating current charging unit 150 or the direct current charging unit 160 to charge the battery pack.

In this embodiment, as shown in FIG. 2, the plurality of battery packs include, for example, the first battery pack U1 and the second battery pack U2. The positive electrode of the first battery pack U1 is connected to the positive electrode of the direct current charging unit 160 through the first positive contactor F3 and the first contactor K1, and a negative electrode of the first battery pack U1 is connected to the positive electrode of the alternating current charging unit 150. The positive electrode of the second battery pack U2 is connected to the positive electrode of the alternating current charging unit 150 through the second contactor K2, the negative electrode of the second battery pack U2 is connected to the negative electrode of the alternating current charging unit 150 through a first negative contactor F1, and the negative electrode of the second battery pack U2 is further connected to the negative electrode of the direct current charging unit 160 through the first negative contactor F1 and the second negative contactor F2. When none of the battery packs is faulty, the control module controls the alternating current charging unit 150 or the direct current charging unit 160 to charge the battery packs, thereby improving safety redundancy performance and reliability of the vehicle.

In an embodiment of this application, with reference to FIG. 2, the plurality of battery packs include the first battery pack U1 and the second battery pack U2. The positive electrode of the first battery pack U1 is separately connected to the high-voltage electrical load Y1 of the electric vehicle and the control module 140 through the first positive contactor F3, the positive electrode of the first battery pack U1 is further connected to the positive electrode of the direct current charging unit 160 through the first positive contactor F3 and the first contactor K1, and the negative electrode of the first battery pack U1 is connected to the high-voltage electrical load Y1 through the second contactor K2. The positive electrode of the second battery pack U2 is connected to the negative electrode of the first battery pack U1, the positive electrode of the second battery pack U2 is further connected to the positive electrode of the alternating current charging unit 150 through the second contactor K2, the negative electrode of the second battery pack U2 is connected to the negative electrode of the alternating current charging unit 150 through the first negative contactor F1, and the negative electrode of the second battery pack U2 is further connected to the negative electrode of the direct current charging unit 160 through the first negative contactor F1 and the second negative contactor F2. The control module 140 is separately connected to the first positive contactor F3 and the first negative contactor F1, and is configured to control on/off of the first positive contactor F3 and the first negative contactor F1.

In this embodiment, as shown in FIG. 2, the first battery pack U1 is connected in series to the second battery pack U2, the negative electrode of the first battery pack U1 is connected to the negative electrode of the high-voltage electrical load Y1 through the second contactor K2, and is connected to the positive electrode of the alternating current charging unit 150, the negative electrode of the high-voltage electrical load Y1 is connected to the positive electrode of the alternating current charging unit 150, and the positive electrode of the first battery pack U1 is connected to the positive electrode of the direct current charging unit 160 through the first positive contactor F3 and the first contactor K1. The positive electrode of the second battery pack U2 is connected to the negative electrode of the first battery pack U1, and a connection manner is the same as a connection line of the negative electrode of the first battery pack U1. One connection line of the negative electrode of the second battery pack U2 is a connection to the negative electrode of the alternating current charging unit 150 through the first negative contactor F1, and another connection line is a connection to the negative electrode of the direct current charging unit 160 through the second negative contactor F2. The control module 140 is separately connected to the first positive contactor F3 and the first negative contactor F1, to control on/off of the first positive contactor F3 and the first negative contactor F1, so as to isolate a faulty battery pack. Power is provided to the vehicle by using two battery packs as the power battery. If a single battery pack is faulty, the other intact battery pack may continue to supply power to the high-voltage system, to avoid a breakdown of the vehicle in a traveling process and improve an endurance capability of the vehicle.

In an embodiment of this application, with reference to FIG. 2, the electric vehicle control system 100 further includes the third contactor K3. One end of the third contactor K3 is separately connected to the negative electrode of the first battery pack U1 and the positive electrode of the second battery pack U2, and the one end of the third contactor K3 is further connected to the positive electrode of the alternating current charging unit 150 through the second contactor K2. The other end of the third contactor K3 is connected to the drive motor 130, and the other end of the third contactor K3 is further connected to the positive electrode of the direct current charging unit 160 through the fourth contactor K4.

In an embodiment of this application, with reference to FIG. 2, the electric vehicle control system 100 further includes the fifth contactor K5 and the sixth contactor K6. One end of the fifth contactor K5 is separately connected to the one end of the third contactor K3, the negative electrode of the first battery pack U1, and the positive electrode of the second battery pack U2, and the one end of the fifth contactor K5 is further connected to the positive electrode of the alternating current charging unit 150 through the second contactor K2. The other end of the fifth contactor K5 is connected to the control module 140, the other end of the fifth contactor K5 is further connected to the positive electrode of the first battery pack U1 through the first positive contactor F3, and the other end of the fifth contactor K5 is further connected to the positive electrode of the direct current charging unit 160 through the first contactor K1. One end of the sixth contactor K6 is separately connected to the one end of the fifth contactor K5, the one end of the third contactor K3, the negative electrode of the first battery pack U1, and the positive electrode of the second battery pack U2, and the one end of the sixth contactor K6 is further connected to the positive electrode of the alternating current charging unit 150 through the second contactor K2. The other end of the sixth contactor K6 is separately connected to the negative electrode of the alternating current charging unit 150 and the control module 140, the other end of the sixth contactor K6 is further connected to the negative electrode of the second battery pack U2 through the first negative contactor F1, and the other end of the sixth contactor K6 is further connected to the negative electrode of the direct current charging unit 160 through the second negative contactor F2.

In an embodiment of this application, with reference to FIG. 2, the control module 140 includes the control unit and the switching transistor unit 170. The switching transistor unit 170 is connected to the drive motor 130. The control unit is configured to control an on/off state of the switching transistor unit 170.

Specifically, the control unit may control the on/off state of the switching transistor unit 170, and then control, by using the on/off state of the switching transistor unit 170, a running status of the drive motor 130 connected to the switching transistor unit 170, for example, control the drive motor 130 to start or stop, to control a traveling status of the vehicle.

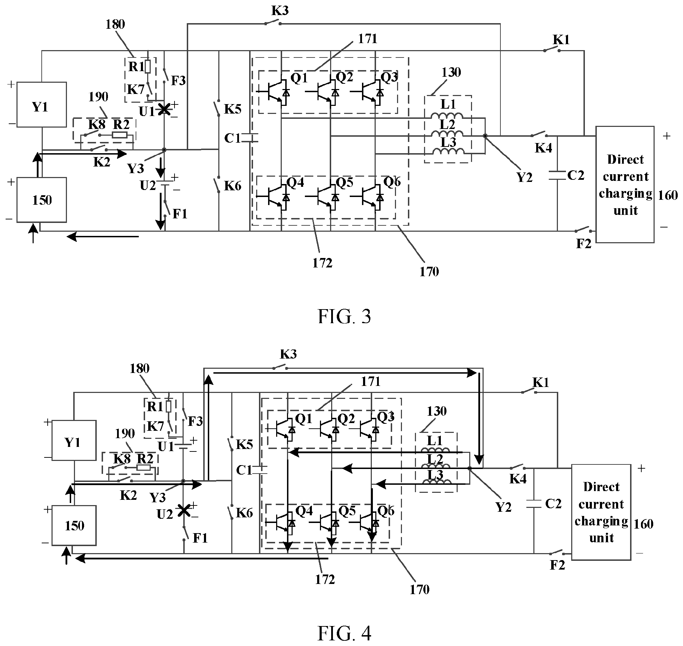

In an embodiment of this application, with reference to FIG. 2 and FIG. 3, the switching transistor unit 170 includes an upper bridge switching unit 171 and a lower bridge switching unit 172. The upper bridge switching unit 171 includes a first IGBT component Q1, a second IGBT component Q2, and a third IGBT component Q3. The lower bridge switching unit 172 includes a fourth IGBT component Q4, a fifth IGBT component Q5, and a sixth IGBT component Q6.

A first terminal of the first IGBT component Q1 is connected to the positive electrode of the first battery pack U1 through the first positive contactor F3, the first terminal of the first IGBT component Q1 is further connected to the positive electrode of the direct current charging unit 160 through the first contactor K1, a second terminal of the first IGBT component Q1 is connected to a first terminal of the fourth IGBT component Q4, and a third terminal of the first IGBT component Q1 is connected to the control unit.

A first terminal of the second IGBT component Q2 is connected to the first terminal of the first IGBT component Q1, the first terminal of the second IGBT component Q2 is further connected to the positive electrode of the first battery pack U1 through the first positive contactor F3, the first terminal of the second IGBT component Q2 is further connected to the positive electrode of the direct current charging unit 160 through the first contactor K1, a second terminal of the second IGBT component Q2 is connected to a first terminal of the fifth IGBT component Q5, and a third terminal of the second IGBT component Q2 is connected to the control unit.

A first terminal of the third IGBT component Q3 is separately connected to the first terminal of the first IGBT component Q1 and the first terminal of the second IGBT component Q2, the first terminal of the third IGBT component Q3 is further connected to the positive electrode of the first battery pack U1 through the first positive contactor F3, the first terminal of the third IGBT component Q3 is further connected to the positive electrode of the direct current charging unit 160 through the first contactor K1, a second terminal of the third IGBT component Q3 is connected to a first terminal of the sixth IGBT component Q6, and a third terminal of the third IGBT component Q3 is connected to the control unit.

A second terminal of the fourth IGBT component Q4 is connected to the negative electrode of the alternating current charging unit 150, the second terminal of the fourth IGBT component Q4 is further connected to the negative electrode of the second battery pack U2 through the first negative contactor F1, the second terminal of the fourth IGBT component Q4 is further connected to the negative electrode of the direct current charging unit 160 through the second negative contactor F2, and a third terminal of the fourth IGBT component Q4 is connected to the control unit.

A second terminal of the fifth IGBT component Q5 is connected to the second terminal of the fourth IGBT component Q4, the second terminal of the fifth IGBT component Q5 is further connected to the negative electrode of the second battery pack U2 through the first negative contactor F1, the second terminal of the fifth IGBT component Q5 is further connected to the negative electrode of the direct current charging unit 160 through the second negative contactor F2, and a third terminal of the fifth IGBT component Q5 is connected to the control unit.

A second terminal of the sixth IGBT component Q6 is separately connected to the second terminal of the fourth IGBT component Q4 and the second terminal of the fifth IGBT component Q5, the second terminal of the sixth IGBT component Q6 is further connected to the negative electrode of the second battery pack U2 through the first negative contactor F1, the second terminal of the sixth IGBT component Q6 is further connected to the negative electrode of the direct current charging unit 160 through the second negative contactor F2, and a third terminal of the sixth IGBT component Q6 is connected to the control unit.

Specifically, the control unit may be an ECU (Electronic Control Unit, electronic control unit) on the vehicle. The third terminals (namely, control terminals) of all of the first IGBT component Q1, the second IGBT component Q2, the third IGBT component Q3, the fourth IGBT component Q4, the fifth IGBT component Q5, and the sixth IGBT component Q6 are connected to the ECU, and may be turned on or off by receiving a control signal (for example, a PWM signal) sent by the ECU, to control a running status of the drive motor 130.

In this embodiment, with reference to FIG. 2, the first terminal of the first IGBT component Q1 is connected to the positive electrode of the first battery pack U1 through the first positive contactor F3, and is connected to the positive electrode of the direct current charging unit 160 through the first contactor K1, the second terminal of the first IGBT component Q1 is connected to the fourth IGBT component Q4, and the third terminal of the first IGBT component Q1 is connected to the control unit (not shown in the figure). The first terminal of the second IGBT component Q2 is connected to the first terminal of the first IGBT component Q1, is connected to the positive electrode of the first battery pack U1 through the first positive contactor F3, and is further connected to the positive electrode of the direct current charging unit 160 through the first contactor K1, the second terminal of the second IGBT component Q2 is connected to the first terminal of the fifth IGBT component Q5, and the third terminal of the second IGBT component Q2 is connected to the control unit. As shown in FIG. 2, the first terminal of the third IGBT component Q3 is separately connected to the first terminal of the first IGBT component Q1 and the first terminal of the second IGBT component Q2, is further connected to the positive electrode of the first battery pack U1 through the first positive contactor F3, and is connected to the positive electrode of the direct current charging unit 160 through the first contactor K1, the second terminal of the third IGBT component Q3 is connected to the first terminal of the sixth IGBT component Q6, and the third terminal of the third IGBT component Q3 is also connected to the control unit. The first terminal of the fourth IGBT component Q4 is connected to the second terminal of the first IGBT component Q1, the second terminal of the fourth IGBT component Q4 is connected to the negative electrode of the second battery pack U2 through the first negative contactor F1, is connected to the negative electrode of the alternating current charging unit 150, and is further connected to the negative electrode of the direct current charging unit 160 through the second negative contactor F2, and the third terminal of the fourth IGBT component Q4 is connected to the control unit. The first terminal of the fifth IGBT component Q5 is connected to the second terminal of the second IGBT component Q2, the second terminal of the fifth IGBT component Q5 is connected to the second terminal of the fourth IGBT component Q4, is further connected to the negative electrode of the second battery pack U2 through the first negative contactor F1, and is connected to the negative electrode of the direct current charging unit 160 through the second negative contactor F2, and the third terminal of the fifth IGBT component Q5 is connected to the control unit. The first terminal of the sixth IGBT component Q6 is connected to the second terminal of the third IGBT component Q3, the second terminal of the sixth IGBT component Q6 is connected to the second terminal of the fourth IGBT component Q4 and the second terminal of the fifth IGBT component Q5, is connected to the negative electrode of the second battery pack U2 through the first negative contactor F1, and is connected to the negative electrode of the direct current charging unit 160 through the second negative contactor F2, and the third terminal of the sixth IGBT component Q6 is connected to the control unit. By controlling the on/off state of the switching transistor unit 170, a circuit structure and a circuit current flow direction may be adjusted for the plurality of battery packs, so that when some of the battery packs are faulty, the faulty battery packs are isolated, and a non-faulty battery pack is charged, to ensure normal operation of the high-voltage system.

In an embodiment of this application, with reference to FIG. 2, the drive motor 130 includes a first inductor L1, a second inductor L2, and a third inductor L3. One end of the first inductor L1 is separately connected to the second terminal of the first IGBT component Q1 and the first terminal of the fourth IGBT component Q4, the other end of the first inductor L1 is connected to the other end of the third contactor K3, and the other end of the first inductor L1 is further connected to the positive electrode of the direct current charging unit 160 through the fourth contactor K4. One end of the second inductor L2 is separately connected to the second terminal of the second IGBT component Q2 and the first terminal of the fifth IGBT component Q5, the other end of the second inductor L2 is separately connected to the other end of the third contactor K3 and the other end of the first inductor L1, and the other end of the second inductor L2 is further connected to the positive electrode of the direct current charging unit 160 through the fourth contactor K4. One end of the third inductor L3 is separately connected to the second terminal of the third IGBT component Q3 and the first terminal of the sixth IGBT component Q6, the other end of the third inductor L3 is separately connected to the other end of the third contactor K3, the other end of the first inductor L1, and the other end of the second inductor L2, and the other end of the third inductor L3 is further connected to the positive electrode of the direct current charging unit 160 through the fourth contactor K4.

In this embodiment, with reference to FIG. 2, the drive motor 130 includes the three-phase inductor, namely, the first inductor L1, the second inductor L2, and the third inductor L3. One end of the first inductor L1 is separately connected to the second terminal of the first IGBT component Q1 and the first terminal of the fourth IGBT component Q4, and the other end is connected to the other end of the third contactor K3, and is further connected to the positive electrode of the direct current charging unit 160 through the fourth contactor K4. One end of the second inductor L2 is separately connected to the second terminal of the second IGBT component Q2 and the first terminal of the fifth IGBT component Q5, and the other end is connected to the other end of the third contactor K3 and the other end of the first inductor L1, and is further connected to the positive electrode of the direct current charging unit 160 through the fourth contactor K4. One end of the third inductor L3 is separately connected to the second terminal of the third IGBT component Q3 and the first terminal of the sixth IGBT component Q6, and the other end is connected to the other end of the third contactor K3, the other end of the first inductor L1, and the other end of the second inductor L2, and is further connected to the positive electrode of the direct current charging unit 160 through the fourth contactor K4.

In an embodiment of this application, with reference to FIG. 2, the electric vehicle control system 100 further includes the first pre-charging unit 180. The first pre-charging unit 180 is connected in parallel to the first positive contactor F3.

In this embodiment, with reference to FIG. 2, the first pre-charging unit 180 is connected in parallel to two ends of the first positive contactor F3. Specifically, the first pre-charging unit 180 is connected in parallel to two ends of the third contactor K3, which may serve as a pre-charging circuit and a protection circuit, to prevent the third contactor K3 from sticking or being damaged due to a high current, reduce sparking and arcing during contact of the contactor, reduce impact, and ensure safety and reliability of the entire circuit.

In an embodiment of this application, with reference to FIG. 2, the first pre-charging unit 180 includes a first resistor R1 and a seventh contactor K7 (namely, a pre-charging contactor) that are connected in series.

In this embodiment, as shown in FIG. 2, the first resistor R1 and the seventh contactor K7 are connected in series to form the first pre-charging unit 180, which may perform a pre-charging function, to protect the circuit and reduce an inrush current during power-on.

In an embodiment of this application, with reference to FIG. 2, the electric vehicle control system 100 further includes the second pre-charging unit 190. The second pre-charging unit 190 is connected in parallel to the second contactor K2.

In this embodiment, with reference to FIG. 2, the second pre-charging unit 190 is connected in parallel to two ends of the second contactor K2. Specifically, a pre-charging unit, namely, the second pre-charging unit 190, is connected in parallel to the two ends of the second contactor K2, to effectively protect the circuit, perform a pre-charging function in the circuit, avoid a case in which the second contactor K2 sticks or is damaged when a high current is generated, reduce sparking and arcing during contact of the contactor, reduce impact, and ensure safety and reliability of the entire circuit.

In an embodiment of this application, with reference to FIG. 2, the second pre-charging unit 190 includes a second resistor R2 and an eighth contactor K8 that are connected in series.

In this embodiment, as shown in FIG. 2, the second pre-charging unit 190 formed by connecting the second resistor R2 and the eighth contactor K8 in series may perform a pre-charging function, and may protect the second contactor K2 connected in parallel to the second pre-charging unit 190, to protect the circuit and reduce an inrush current generated when the battery pack is powered on.

In this embodiment, with reference to FIG. 2, the electric vehicle control system 100 further includes the first capacitor C1. One end of the first capacitor C1 is connected to the first terminal of the first IGBT component Q1, and the other end of the first capacitor C1 is connected to the second terminal of the fourth IGBT component Q4.

In this embodiment, as shown in FIG. 2, the first capacitor C1 is connected in parallel to the first battery pack U1 and the second battery pack U2 that are connected in series, one end of the first capacitor C1 is connected to the first terminal of the first IGBT component Q1, and the other end of the first capacitor C1 is connected to the second terminal of the fourth IGBT component Q4. Specifically, main functions of the first capacitor C1 are filtering and voltage stabilization. By performing filtering and limiting voltage fluctuation, stability and safety of a charging system are ensured. For example, when an input voltage suddenly changes or fluctuates, the first capacitor C1 filters, smooths, and limits the voltage, so that an output voltage and current can be stably and safely processed, to ensure normal operation of the alternating current charging unit 150 and avoid damage to a charging device.

In an embodiment of this application, with reference to FIG. 2, the electric vehicle control system 100 further includes the second capacitor C2. The second capacitor C2 is connected in parallel to the direct current charging unit 160.

In this embodiment, in FIG. 2, the second capacitor C2 is connected in parallel to two ends of the direct current charging unit 160, and is mainly used to control and limit a current and a voltage at an input port of the direct current charging unit 160, to ensure that conversion and input of electrical energy can be stably and adequately ensured, and avoid interference and damage caused to the system due to current and voltage fluctuation.

In an embodiment of this application, with reference to FIG. 3 to FIG. 5, the control unit is configured to: when the first battery pack U1 is faulty and the second battery pack U2 is not faulty, control the first battery pack U1 to be isolated, and control the first negative contactor F1 to be closed, to charge the second battery pack U2 through the alternating current charging unit 150; or when the second battery pack U2 is faulty and the first battery pack U1 is not faulty, control the second battery pack U2 to be isolated, control the second contactor K2 and the third contactor K3 to be closed, control the upper bridge switching unit 171 to be open, and control the lower bridge switching unit 172 to be closed, to charge the first inductor L1, the second inductor L2, and the third inductor L3 through the alternating current charging unit 150, and when charging ends, control the upper bridge switching unit 171 to be closed, control the lower bridge switching unit 172 to be open, control the second contactor K2 to be open, and control the first positive contactor F3 and the third contactor K3 to be closed, to charge the first battery pack U1 through the first inductor L1, the second inductor L2, and the third inductor L3.

In this embodiment, for an alternating current charging manner, when the first battery pack U1 is faulty and the second battery pack U2 is not faulty, alternating current charging may be performed on the second battery pack U2. As shown in FIG. 3, when the first battery pack U1 is faulty, a charging gun is connected to the alternating current charging unit 150. The control unit controls the first positive contactor F3 of the first battery pack U1 to be open, to isolate the first battery pack U1, and controls the first negative contactor F1 to be closed, to pre-charge the circuit through the second pre-charging unit 190. After pre-charging is completed, the non-faulty second battery pack U2 is charged through the alternating current charging unit 150. A current flow direction is shown by an arrow in FIG. 3. By adjusting the circuit structure, the faulty battery pack is isolated, and the non-faulty battery pack is charged through the alternating current charging unit 150, to ensure normal operation of the high-voltage system.

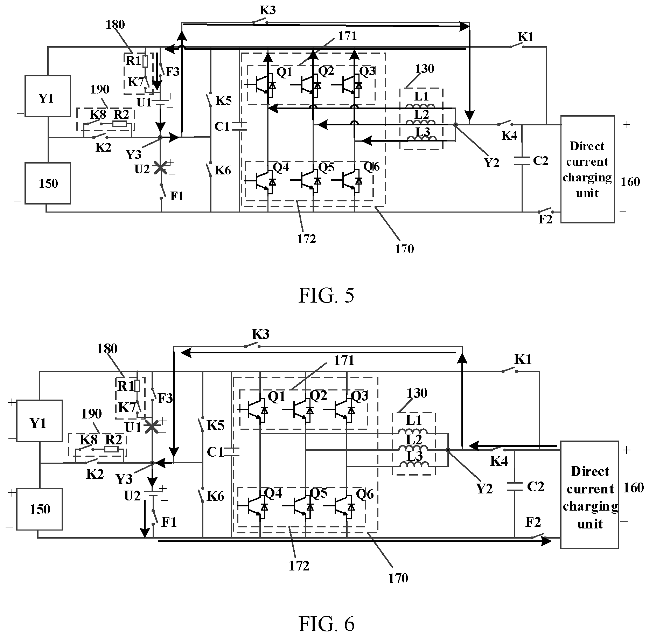

In addition, when the second battery pack U2 is faulty and the first battery pack U1 is not faulty, alternating current charging is performed on the first battery pack U1. As shown in FIG. 4, when the second battery pack U2 is faulty, a charging gun is connected to the alternating current charging unit 150. The control unit controls the first negative contactor F1 to be open, to isolate the second battery pack U2, and controls the second contactor K2 and the third contactor K3 to be in a closed state. The control unit controls the upper bridge switching unit 171 to be open, and controls the lower bridge switching unit 172 to be closed, so that a current from the alternating current charging unit 150 flows to the drive motor 130 through the N wire, and the three-phase inductor in the drive motor is charged and stores energy. A current flow direction is shown by an arrow in FIG. 4. Further, with reference to FIG. 5, freewheeling occurs in the three-phase inductor in the drive motor 130 to charge the first battery pack U1, that is, the first battery pack U1 is charged through the three-phase inductor in the drive motor 130, namely, the first inductor L1, the second inductor L2, and the third inductor L3. A current flow direction is shown by an arrow in FIG. 5. By adjusting the circuit structure, the faulty battery pack is isolated, and the non-faulty battery pack is charged through the alternating current charging unit 150 and the drive motor 130, to ensure normal operation of the high-voltage system.

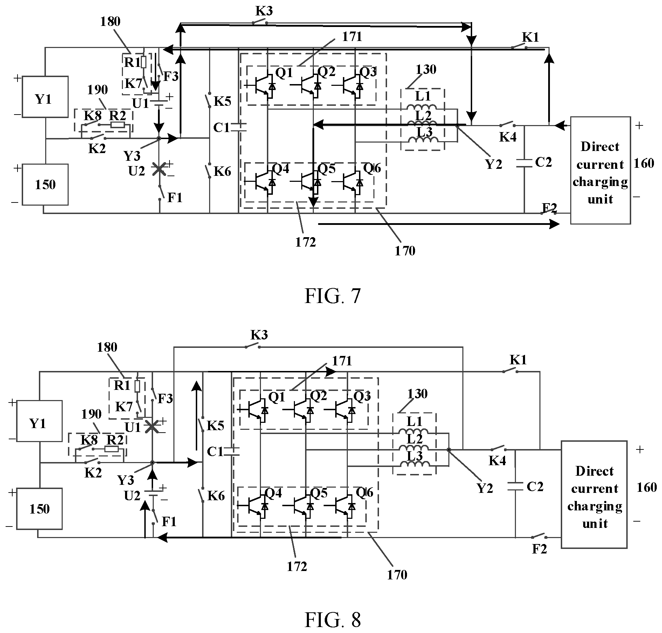

In an embodiment of this application, with reference to FIG. 6 and FIG. 7, the control unit is configured to: when the first battery pack U1 is faulty and the second battery pack U2 is not faulty, control the first battery pack U1 to be isolated, and control the first negative contactor F1, the second negative contactor F2, the third contactor K3, and the fourth contactor K4 to be closed, to charge the second battery pack U2 through the direct current charging unit 160; or when the second battery pack U2 is faulty and the first battery pack U1 is not faulty, control the second battery pack U2 to be isolated, control the first contactor K1, the first positive contactor F3, the third contactor K3, and the second negative contactor F2 to be closed, control the fourth contactor K4 to be open, control the upper bridge switching unit 171 to be open, and control at least one IGBT component in the lower bridge switching unit 172 to be closed, to charge the first battery pack U1 through the direct current charging unit 160.

In this embodiment, for a direct current charging manner, when the first battery pack U1 is faulty and the second battery pack U2 is not faulty, the second battery pack U2 may be charged through the direct current charging unit 160. As shown in FIG. 6, the charging gun is connected to a charging port of the direct current charging unit 160. The control unit controls the first positive contactor F3 to be open, to isolate the first battery pack U1, and controls the first negative contactor F1, the second negative contactor F2, the third contactor K3, and the fourth contactor K4 to be closed, to charge the second battery pack U2 through the direct current charging unit 160. A current flow direction is shown by an arrow in FIG. 6. By adjusting the circuit structure, the faulty battery pack is isolated, and the non-faulty battery pack is charged through the direct current charging unit 160, to ensure normal operation of the high-voltage system.

In addition, when the second battery pack U2 is faulty and the first battery pack U1 is not faulty, the first battery pack U1 may be charged through the direct current charging unit 160. As shown in FIG. 7, the charging gun is connected to a charging port of the direct current charging unit 160. The control unit controls the first negative contactor F1 to be open, to isolate the second battery pack U2, controls the first contactor K1, the second negative contactor F2, the first positive contactor F3, and the third contactor K3 to be closed, and controls the fourth contactor K4 to be open. In addition, the control unit controls the upper bridge switching unit 171 to be open, that is, the first IGBT component Q1, the second IGBT component Q2, and the third IGBT component Q3 to be open, and controls at least one IGBT component (namely, the fourth IGBT component Q4 and/or the fifth IGBT component Q5 and/or the sixth IGBT component Q6) in the lower bridge switching unit 172 to be closed. In the example shown in FIG. 7, the fifth IGBT component Q5 is closed, and the second inductor L2 in the drive motor 130 is pre-charged through the direct current charging unit 160. After pre-charging is completed, the non-faulty first battery pack U1 may be charged. A current flow direction is shown by an arrow in FIG. 7. By adjusting the circuit structure, the faulty battery pack is isolated, and the non-faulty battery pack is charged through the direct current charging unit 160, to ensure normal operation of the high-voltage system.

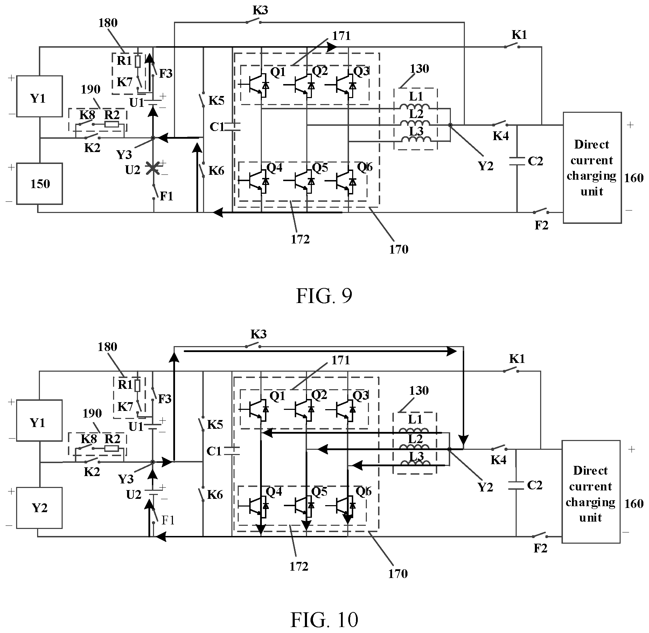

In an embodiment of this application, with reference to FIG. 8 and FIG. 9, the control unit is configured to: when the first battery pack U1 is faulty, control the first battery pack U1 to be isolated, and control the first negative contactor F1 and the fifth contactor K5 to be closed, to supply power to the drive motor 130 through the second battery pack U2; or when the second battery pack U2 is faulty, control the second battery pack U2 to be isolated, and control the first positive contactor F3 and the sixth contactor K6 to be closed, to supply power to the drive motor 130 through the first battery pack U1.

In this embodiment, when the first battery pack U1 is faulty, the second battery pack U2 may continue to supply power to the drive motor 130, to drive the electric vehicle to continue to travel. As shown in FIG. 8, an arrow shows a current direction. When the first battery pack U1 is faulty, the control unit controls the first positive contactor F3 to be open, to isolate the first battery pack U1, and controls the first negative contactor F1 and the fifth contactor K5 to be closed, to supply power to the drive motor 130 through the second battery pack U2, so that the vehicle can continue to travel, to avoid a breakdown problem of the vehicle and ensure endurance of the battery pack.

In addition, when the second battery pack U2 is faulty, the first battery pack U1 may continue to supply power to the drive motor 130, to drive the electric vehicle to continue to travel. As shown in FIG. 9, an arrow shows a current direction. When the second battery pack U2 is faulty, the control unit controls the first negative contactor F1 to be open, to isolate the second battery pack U2, and controls the first positive contactor F3 and the sixth contactor K6 to be closed, to supply power to the drive motor 130 through the first battery pack U1, so that the vehicle can continue to travel, to avoid a breakdown problem of the vehicle and ensure endurance of the battery pack.

In an embodiment of this application, as shown in FIG. 8, the control unit is configured to control the first positive contactor F3 to be open, to isolate the first battery pack U1. That is, the control unit may control an on/off state of the first positive contactor F3, to isolate the faulty first battery pack U1.

In an embodiment of this application, as shown in FIG. 7, the control unit is configured to control the first negative contactor F1 to be open, to isolate the second battery pack U2. That is, the control unit may control an on/off state of the first negative contactor F1, and control the first negative contactor F1 to isolate the faulty second battery pack U2.

In an embodiment of this application, the control unit is configured to: when neither the first battery pack U1 nor the second battery pack U2 is faulty, control a battery pack with a higher state of charge to charge a battery pack with a lower state of charge in the first battery pack U1 and the second battery pack U2, to implement state of charge balancing.

In this embodiment, if both the two battery packs, namely, the first battery pack U1 and the second battery pack U2, are not faulty, when states of charge of the two battery packs are inconsistent, the system may store energy for the vehicle through the N wire and the drive motor 130, that is, control the battery pack with a higher state of charge to charge the battery pack with a lower state of charge in the first battery pack U1 and the second battery pack U2, so that state of charge balancing is implemented between the states of charge of the two battery packs, thereby prolonging a service life of each battery pack and safety and reliability of the vehicle.

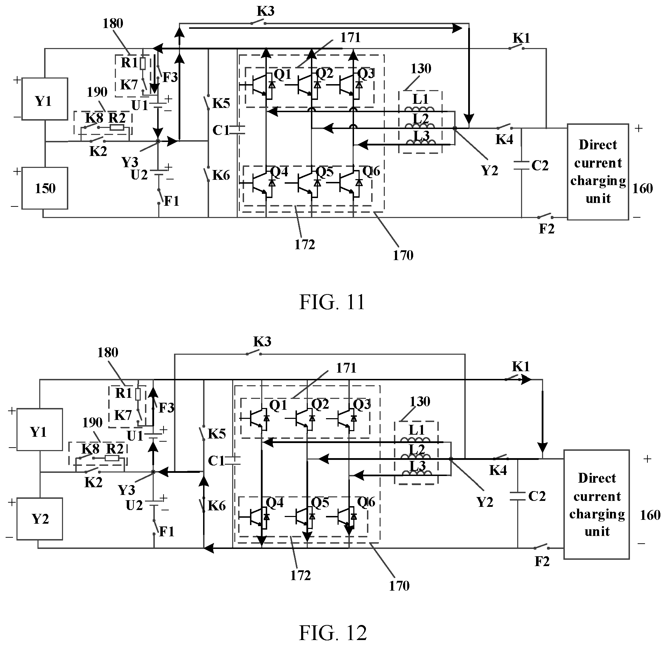

In an embodiment of this application, with reference to FIG. 10 and FIG. 11, the control unit is configured to: when a state of charge of the second battery pack U2 is greater than a state of charge of the first battery pack U1, control the first positive contactor F3 to be open, control the first negative contactor F1 and the third contactor K3 to be closed, control the upper bridge switching unit 171 to be open, and control the lower bridge switching unit 172 to be closed, to charge the first inductor L1, the second inductor L2, and the third inductor L3 through the second battery pack U2; and after charging of the first inductor L1, the second inductor L2, and the third inductor L3 ends, control the first positive contactor F3 and the third contactor K3 to be closed, control the first negative contactor F1 to be open, control the upper bridge switching unit 171 to be closed, and control the lower bridge switching unit 172 to be open, to charge the first battery pack U1 through the first inductor L1, the second inductor L2, and the third inductor L3, so as to implement state of charge balancing between the first battery pack U1 and the second battery pack U2.

In this embodiment, when the state of charge of the second battery pack U2 is greater than the state of charge of the first battery pack, with reference to FIG. 10, the third contactor K3 and the first negative contactor F1 on the N wire may be controlled to be closed, and the control unit controls the upper bridge switching unit 171 to be open, that is, the first IGBT component Q1, the second IGBT component Q2, and the third IGBT component Q3 to be open, and controls the lower bridge switching unit 172 to be closed, that is, the fourth IGBT component Q4, the fifth IGBT component Q5, and the sixth IGBT component Q6 to be closed, to charge and store energy in the three-phase inductor in the drive motor 130 through the second battery pack U2. A current flow direction is shown by an arrow in FIG. 10. Further, with reference to FIG. 11, a process in which freewheeling occurs in the three-phase inductor in the drive motor 130 to charge the first battery pack U1 is shown, that is, the first battery pack U1 is charged by electrical energy stored in the first inductor L1, the second inductor L2, and the third inductor L3. A current flow direction is shown by an arrow in FIG. 11. In this way, the second battery pack U2 may charge the first battery pack U1, to implement state of charge balancing between the first battery pack U1 and the second battery pack U2. When the states of charge of the first battery pack U1 and the second battery pack U2 are inconsistent, a plurality of charging and discharging processes are performed on the three-phase inductor in the drive motor 130, to implement state of charge balancing between the first battery pack U1 and the second battery pack U2, so that state of charge balancing is implemented between the battery packs. This helps prolong a service life of the battery pack.

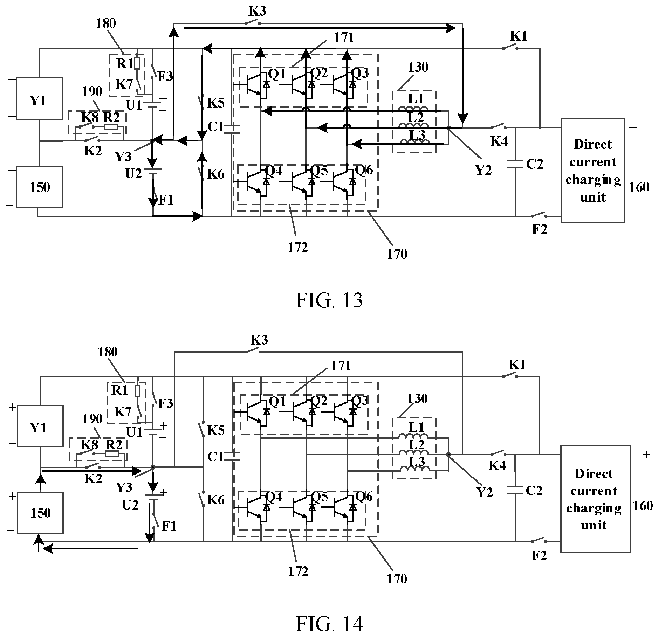

In an embodiment of this application, with reference to FIG. 12 and FIG. 13, the control unit is configured to: when the state of charge of the first battery pack U1 is greater than the state of charge of the second battery pack U2, control the first positive contactor F3, the first contactor K1, the fourth contactor K4, and the sixth contactor K6 to be closed, control the first negative contactor F1 to be open, control the upper bridge switching unit 171 to be open, and control the lower bridge switching unit 172 to be closed, to charge the first inductor L1, the second inductor L2, and the third inductor L3 through the first battery pack U1; and after charging of the first inductor L1, the second inductor L2, and the third inductor L3 ends, control the first positive contactor F3 to be open, control the first negative contactor F1, the third contactor K3, the fifth contactor K5, and the sixth contactor K6 to be closed, control the upper bridge switching unit 171 to be closed, and control the lower bridge switching unit 172 to be open, to charge the second battery pack U2 through the first inductor L1, the second inductor L2, and the third inductor L3.

In this embodiment, when the state of charge of the first battery pack U1 is greater than the state of charge of the second battery pack U2, as shown in FIG. 12, the first positive contactor F3, the first contactor K1, the fourth contactor K4, and the sixth contactor K6 may be controlled to be closed, the first negative contactor F1 is controlled to be open, the upper bridge switching unit 171 is controlled to be open, that is, the first IGBT component Q1, the second IGBT component Q2, and the third IGBT component Q3 are controlled to be open, and the lower bridge switching unit 172 is controlled to be closed, that is, the fourth IGBT component Q4, the fifth IGBT component Q5, and the sixth IGBT component Q6 are controlled to be closed, to charge and store energy in the three-phase inductor in the drive motor 130 through the first battery pack U1. A current flow direction is shown by an arrow in FIG. 12.

As shown in FIG. 13, after charging of the first inductor L1, the second inductor L2, and the third inductor L3 ends, the first positive contactor F3 is controlled to be open, the first negative contactor F1, the third contactor K3, the fifth contactor K5, and the sixth contactor K6 are controlled to be closed, the upper bridge switching unit 171 is controlled to be closed, that is, the first IGBT component Q1, the second IGBT component Q2, and the third IGBT component Q3 are controlled to be closed, and the lower bridge switching unit 172 is controlled to be open, that is, the fourth IGBT component Q4, the fifth IGBT component Q5, and the sixth IGBT component Q6 are controlled to be open. Therefore, a process in which freewheeling occurs in the three-phase inductor in the drive motor 130 to charge the second battery pack U2 is shown, that is, the second battery pack U2 is charged by electrical energy stored in the first inductor L1, the second inductor L2, and the third inductor L3. A current flow direction is shown by an arrow in FIG. 13. In this way, the first battery pack U1 may charge the second battery pack 2, to implement state of charge balancing between the first battery pack U1 and the second battery pack U2. When the states of charge of the first battery pack U1 and the second battery pack U2 are inconsistent, a plurality of charging and discharging processes are performed on the three-phase inductor in the drive motor 130, to implement state of charge balancing between the first battery pack U1 and the second battery pack U2, so that state of charge balancing is implemented between the battery packs. This helps prolong a service life of the battery pack.

In an embodiment of this application, with reference to FIG. 10 and FIG. 14, before controlling the battery pack with a higher state of charge to charge the battery pack with a lower state of charge in the first battery pack U1 and the second battery pack U2, the control unit is further configured to control the charging module 120 to charge the battery pack with a higher state of charge in the first battery pack U1 and the second battery pack U2, until the battery pack with a higher state of charge in the first battery pack U1 and the second battery pack U2 is fully charged. A current flow direction is shown by an arrow in FIG. 14.

In this embodiment, with reference to FIG. 10 and FIG. 14, before state of charge balancing is implemented between the battery packs, the control unit controls the first negative contactor F1 and the second contactor K2 to be closed, to charge the second battery pack U2 through the alternating current charging unit 150, until the second battery pack U2 is fully charged, and then state of charge balancing is performed between the battery packs. That is, after charging of the second battery pack U2 is completed, the third contactor K3 and the first negative contactor F1 on the N wire are controlled to be closed, and the control unit controls the upper bridge switching unit 171 to be open, that is, the first IGBT component Q1, the second IGBT component Q2, and the third IGBT component Q3 to be open, and controls the lower bridge switching unit 172 to be closed, that is, the fourth IGBT component Q4, the fifth IGBT component Q5, and the sixth IGBT component Q6 to be closed, to charge and store energy in the three-phase inductor in the drive motor 130 through the second battery pack U2. Further, the first battery pack U1 is charged by electrical energy stored in the first inductor L1, the second inductor L2, and the third inductor L3. In this way, the first battery pack U1 and the second battery pack U2 may perform mutual charging and discharging, to implement state of charge balancing between the first battery pack U1 and the second battery pack U2. When the states of charge of the first battery pack U1 and the second battery pack U2 are inconsistent, a plurality of charging and discharging processes are performed on the three-phase inductor in the drive motor 130, to implement state of charge balancing between the first battery pack U1 and the second battery pack U2, so that state of charge balancing is implemented between the battery packs. This helps prolong a service life of the battery pack. In addition, before state of charge balancing is performed, the second battery pack U2 is charged, so that state of charge balancing is performed after the second battery pack U2 is fully charged. This helps improve efficiency and effect of state of charge balancing.

In a specific embodiment, state of charge balancing may alternatively be implemented between the battery packs by discharging the first battery pack U1 and charging the second battery pack U2. An implementation principle is similar to the principle of discharging the second battery pack U2 and charging the first battery pack U1. Details are not described herein.

In a specific embodiment, when the first battery pack U1 and the second battery pack U2 perform mutual charging and discharging to implement state of charge balancing between the first battery pack U1 and the second battery pack U2, heating of each battery pack may be further implemented. Specifically, with reference to FIG. 12 and FIG. 13, in a positive half cycle of a fundamental period, when the upper bridge switching unit 171 is open and the lower bridge switching unit 172 is closed, the first battery pack U1 is discharged, and the current flows through the IGBT components in the lower bridge switching unit 172 to charge and store energy in the three-phase inductor in the drive motor 130. When the upper bridge switching unit 171 is closed and the lower bridge switching unit 172 is open, freewheeling occurs in the three-phase inductor to charge the second battery pack U2, and a loop is formed through diodes of the IGBT components in the upper bridge switching unit 171. With reference to FIG. 10 and FIG. 11, in a negative half cycle of the fundamental period, when the lower bridge switching unit 172 is closed and the upper bridge switching unit 171 is open, the second battery pack U2 discharges electricity to the three-phase inductor, and a loop is formed through the IGBT components in the lower bridge switching unit 172. When the upper bridge switching unit 171 is closed and the lower bridge switching unit 172 is open, freewheeling occurs in the three-phase inductor, and the first battery pack U1 is charged through the diodes of the IGBT components in the upper bridge switching unit 171. Therefore, through mutual charging and discharging between the two battery packs, the battery packs can be heated, to achieve an objective of heating the battery packs.

In general, the electric vehicle control system 100 in this embodiment of this application includes a plurality of battery packs connected in series. When some battery packs in the plurality of battery packs are faulty, the control module 140 controls the faulty battery packs to be isolated, controls the charging module 120 and/or the drive motor 130 to charge a non-faulty battery pack, and may control the non-faulty battery pack to supply power to the drive motor 130, to provide power to the vehicle. Therefore, in this application, a circuit structure of a power system of the electric vehicle is adjusted, so that when some battery packs are faulty, another non-faulty battery pack may continue to be charged without being affected, thereby resolving a problem that when some battery packs are faulty, another non-faulty battery pack cannot be charged and cannot operate. This ensures endurance of the vehicle in a short time, reduces a breakdown risk of the vehicle, improves safety redundancy performance and reliability of the vehicle, and reduces a potential safety risk during driving, thereby improving driving safety of the vehicle. In addition, state of charge balancing may be controlled between two battery packs, thereby prolonging a service life of each battery pack.

A further embodiment of this application further discloses an electric vehicle 200.

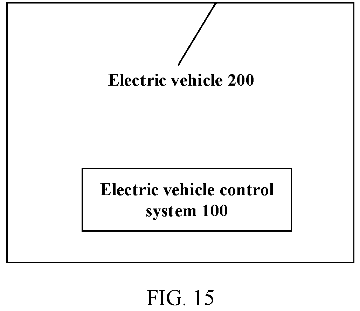

FIG. 15 is a structural block diagram of an electric vehicle according to an embodiment of this application. As shown in FIG. 15, the electric vehicle 200 in this application includes the electric vehicle control system 100 described in any one of the foregoing embodiments of this application.

The electric vehicle 200 according to this embodiment of this application includes a plurality of battery packs connected in series. When some battery packs in the plurality of battery packs are faulty, a control module 140 controls the faulty battery packs to be isolated, controls a charging module 120 and/or a drive motor 130 to charge a non-faulty battery pack, and may control the non-faulty battery pack to supply power to the drive motor 130, to provide power to the vehicle. Therefore, in this application, a circuit structure of a power system of the electric vehicle 200 is adjusted, so that when some battery packs are faulty, another non-faulty battery pack may continue to be charged without being affected, thereby resolving a problem that when some battery packs are faulty, another non-faulty battery pack cannot be charged and cannot operate. This ensures endurance of the vehicle in a short time, reduces a breakdown risk of the vehicle, improves safety redundancy performance and reliability of the vehicle, and reduces a potential safety risk during driving, thereby improving driving safety of the vehicle. In addition, state of charge balancing may be controlled between two battery packs, thereby prolonging a service life of each battery pack.

In the descriptions of this specification, descriptions provided with reference to terms such as "an embodiment", "some embodiments", "an example embodiment", "an example", "a specific example", or "some examples" mean that specific features, structures, materials, or characteristics described with reference to the embodiment or example are included in at least one embodiment or example of this application. In this specification, illustrative descriptions of the foregoing terms do not necessarily refer to a same embodiment or example.

Although embodiments of this application are shown and described, a person of ordinary skill in the art may understand that various changes, modifications, replacements, and variations may be made to these embodiments without departing from the principles and objectives of this application, and the scope of this application is defined by the claims and equivalents thereof.

## Claims

1. An electric vehicle control system (100), comprising:
a charging module (120) , the charging module (120) being separately connected to a plurality of battery packs of an electric vehicle (200);
a drive motor (130), the drive motor (130) being connected to the plurality of battery packs; and
a control module (140), the control module (140) being separately connected to the plurality of battery packs, the drive motor (130), and the charging module (120), and being configured to: when some battery packs in the plurality of battery packs are faulty, control the faulty battery packs to be isolated, and control the charging module (120) and/or the drive motor (130) to charge a non-faulty battery pack.

2. The electric vehicle control system (100) according to claim 1, wherein the control module (140) is further configured to:
when some battery packs in the plurality of battery packs are faulty, control the faulty battery packs to be isolated, and control the non-faulty battery pack to supply power to the drive motor (130).

3. The electric vehicle control system (100) according to claim 1 or 2, wherein the control module (140) is further configured to:
when none of the plurality of battery packs is faulty, control state of charge balancing among the plurality of battery packs.

4. The electric vehicle control system (100) according to any one of claims 1 to 3, wherein the charging module (120) comprises an alternating current charging unit (150) and a direct current charging unit (160); and
the plurality of battery packs are separately connected to the alternating current charging unit (150) and the direct current charging unit (160), and when each battery pack is not faulty, the control module (140) controls the alternating current charging unit (150) or the direct current charging unit (160) to charge the non-faulty battery pack.

5. The electric vehicle control system (100) according to claim 4, wherein the plurality of battery packs comprise:
a first battery pack (U1), a positive electrode of the first battery pack (U1) being connected to a high-voltage electrical load (Y1) of the electric vehicle (200) through a first positive contactor (F3), the positive electrode of the first battery pack (U1) being further connected to a positive electrode of the direct current charging unit (160) through the first positive contactor (F3) and a first contactor (K1), and a negative electrode of the first battery pack (U1) being connected to the high-voltage electrical load (Y1) through a second contactor (K2); and
a second battery pack (U2), a positive electrode of the second battery pack (U2) being connected to the negative electrode of the first battery pack (U1), the positive electrode of the second battery pack (U2) being further connected to a positive electrode of the alternating current charging unit (150) through the second contactor (K2), a negative electrode of the second battery pack (U2) being connected to a negative electrode of the alternating current charging unit (150) through a first negative contactor (F1), and the negative electrode of the second battery pack (U2) being further connected to a negative electrode of the direct current charging unit (160) through the first negative contactor (F1) and a second negative contactor (F2).

6. The electric vehicle control system (100) according to claim 5, further comprising:
a third contactor (K3), one end of the third contactor (K3) being separately connected to the negative electrode of the first battery pack (U1) and the positive electrode of the second battery pack (U2), the one end of the third contactor (K3) being further connected to the positive electrode of the alternating current charging unit (150) through the second contactor (K2), the other end of the third contactor (K3) being connected to the drive motor (130), and the other end of the third contactor (K3) being further connected to the positive electrode of the direct current charging unit (160) through a fourth contactor (K4).

7. The electric vehicle control system (100) according to claim 6, further comprising:
a fifth contactor (K5), one end of the fifth contactor (K5) being separately connected to the one end of the third contactor (K3), the negative electrode of the first battery pack (U1), and the positive electrode of the second battery pack (U2), the other end of the fifth contactor (K5) being further connected to the positive electrode of the first battery pack (U1) through the first positive contactor (F3), and the other end of the fifth contactor (K5) being further connected to the positive electrode of the direct current charging unit (160) through the first contactor (K1); and
a sixth contactor (K6), one end of the sixth contactor (K6) being separately connected to the one end of the fifth contactor (K5), the one end of the third contactor (K3), the negative electrode of the first battery pack (U1), and the positive electrode of the second battery pack (U2), the other end of the sixth contactor (K6) being connected to the negative electrode of the alternating current charging unit (150), and the other end of the sixth contactor (K6) being further connected to the negative electrode of the direct current charging unit (160) through the second negative contactor (F2).

8. The electric vehicle control system (100) according to claim 7, wherein the control module (140) comprises:
a control unit; and
a switching transistor unit (170), the switching transistor unit (170) being connected to the drive motor (130), and the control unit being configured to control an on/off state of the switching transistor unit (170).

9. The electric vehicle control system (100) according to claim 8, wherein the switching transistor unit (170) comprises:
an upper bridge switching unit (171), the upper bridge switching unit (171) comprising a first IGBT component (Q1), a second IGBT component (Q2), and a third IGBT component (Q3); and
a lower bridge switching unit (172), the lower bridge switching unit (172) comprising a fourth IGBT component (Q4), a fifth IGBT component (Q5), and a sixth IGBT component (Q6), wherein
a first terminal of the first IGBT component (Q1) is connected to the positive electrode of the first battery pack (U1) through the first positive contactor (F3), the first terminal of the first IGBT component (Q1) is further connected to the positive electrode of the direct current charging unit (160) through the first contactor (K1), a second terminal of the first IGBT component (Q1) is connected to a first terminal of the fourth IGBT component (Q4), and a third terminal of the first IGBT component (Q1) is connected to the control unit;
a first terminal of the second IGBT component (Q2) is connected to the first terminal of the first IGBT component (Q1), the first terminal of the second IGBT component (Q2) is further connected to the positive electrode of the first battery pack (U1) through the first positive contactor (F3), the first terminal of the second IGBT component (Q2) is further connected to the positive electrode of the direct current charging unit (160) through the first contactor (K1), a second terminal of the second IGBT component (Q2) is connected to a first terminal of the fifth IGBT component (Q5), and a third terminal of the second IGBT component (Q2) is connected to the control unit;
a first terminal of the third IGBT component (Q3) is separately connected to the first terminal of the first IGBT component (Q1) and the first terminal of the second IGBT component (Q2), the first terminal of the third IGBT component (Q3) is further connected to the positive electrode of the first battery pack (U1) through the first positive contactor (F3), the first terminal of the third IGBT component (Q3) is further connected to the positive electrode of the direct current charging unit (160) through the first contactor (K1), a second terminal of the third IGBT component (Q3) is connected to a first terminal of the sixth IGBT component (Q6), and a third terminal of the third IGBT component (Q3) is connected to the control unit;
a second terminal of the fourth IGBT component (Q4) is connected to the negative electrode of the alternating current charging unit (150), the second terminal of the fourth IGBT component (Q4) is further connected to the negative electrode of the second battery pack (U2) through the first negative contactor (F1), the second terminal of the fourth IGBT component (Q4) is further connected to the negative electrode of the direct current charging unit (160) through the second negative contactor (F2), and a third terminal of the fourth IGBT component (Q4) is connected to the control unit;
a second terminal of the fifth IGBT component (Q5) is connected to the second terminal of the fourth IGBT component (Q4), the second terminal of the fifth IGBT component (Q5) is further connected to the negative electrode of the second battery pack (U2) through the first negative contactor (F1), the second terminal of the fifth IGBT component (Q5) is further connected to the negative electrode of the direct current charging unit (160) through the second negative contactor (F2), and a third terminal of the fifth IGBT component (Q5) is connected to the control unit; and
a second terminal of the sixth IGBT component (Q6) is separately connected to the second terminal of the fourth IGBT component (Q4) and the second terminal of the fifth IGBT component (Q5), the second terminal of the sixth IGBT component (Q6) is further connected to the negative electrode of the second battery pack (U2) through the first negative contactor (F1), the second terminal of the sixth IGBT component (Q6) is further connected to the negative electrode of the direct current charging unit (160) through the second negative contactor (F2), and a third terminal of the sixth IGBT component (Q6) is connected to the control unit.

10. The electric vehicle control system (100) according to claim 9, wherein the drive motor (130) comprises:
a first inductor (L1), one end of the first inductor (L1) being separately connected to the second terminal of the first IGBT component (Q1) and the first terminal of the fourth IGBT component (Q4), the other end of the first inductor (L1) being connected to the other end of the third contactor (K3), and the other end of the first inductor (L1) being further connected to the positive electrode of the direct current charging unit (160) through the fourth contactor (K4);
a second inductor (L2), one end of the second inductor (L2) being separately connected to the second terminal of the second IGBT component (Q2) and the first terminal of the fifth IGBT component (Q5), the other end of the second inductor (L2) being separately connected to the other end of the third contactor (K3) and the other end of the first inductor (L1), and the other end of the second inductor (L2) being further connected to the positive electrode of the direct current charging unit (160) through the fourth contactor (K4); and
a third inductor (L3), one end of the third inductor (L3) being separately connected to the second terminal of the third IGBT component (Q3) and the first terminal of the sixth IGBT component (Q6), the other end of the third inductor (L3) being separately connected to the other end of the third contactor (K3), the other end of the first inductor (L1), and the other end of the second inductor (L2), and the other end of the third inductor (L3) being further connected to the positive electrode of the direct current charging unit (160) through the fourth contactor (K4).

11. The electric vehicle control system (100) according to claim 10, further comprising:
a first pre-charging unit (180), the first pre-charging unit (180) being connected in parallel to the first positive contactor (F3).

12. The electric vehicle control system (100) according to claim 11, wherein the first pre-charging unit (180) comprises a first resistor (R1) and a seventh contactor (K7) that are connected in series.

13. The electric vehicle control system (100) according to claim 10, further comprising:
a second pre-charging unit (190), the second pre-charging unit (190) being connected in parallel to the second contactor (K2).

14. The electric vehicle (200) charging control system according to claim 13, wherein the second pre-charging unit (190) comprises a second resistor (R2) and an eighth contactor (K8) that are connected in series.

15. The electric vehicle control system (100) according to any one of claims 9 to 14, further comprising:
a first capacitor (C1), one end of the first capacitor (C1) being connected to the first terminal of the first IGBT component (Q1), and the other end of the first capacitor (C1) being connected to the second terminal of the fourth IGBT component.

16. The electric vehicle control system (100) according to any one of claims 9 to 15, further comprising:
a second capacitor (C2), the second capacitor (C2) being connected in parallel to the direct current charging unit (160).

17. The electric vehicle control system (100) according to claim 10, wherein the control unit is configured to:
when the first battery pack (U1) is faulty and the second battery pack (U2) is not faulty, control the first battery pack (U1) to be isolated, and control the first negative contactor (F1) to be closed, to charge the second battery pack (U2) through the alternating current charging unit (150); or
when the second battery pack (U2) is faulty and the first battery pack (U1) is not faulty, control the second battery pack (U2) to be isolated, control the second contactor (K2) and the third contactor (K3) to be closed, control the upper bridge switching unit (171) to be open, and control the lower bridge switching unit (172) to be closed, to charge the first inductor (L1), the second inductor (L2), and the third inductor (L3) through the alternating current charging unit (150), and when charging ends, control the upper bridge switching unit (171) to be closed, control the lower bridge switching unit (172) to be open, control the second contactor (K2) to be open, and control the first positive contactor (F3) and the third contactor (K3) to be closed, to charge the first battery pack (U1) through the first inductor (L1), the second inductor (L2), and the third inductor (L3).

18. The electric vehicle control system (100) according to any one of claims 9 to 17, wherein the control unit is configured to:
when the first battery pack (U1) is faulty and the second battery pack (U2) is not faulty, control the first battery pack (U1) to be isolated, and control the first negative contactor (F1), the second negative contactor (F2), the third contactor (K3), and the fourth contactor (K4) to be closed, to charge the second battery pack (U2) through the direct current charging unit (160); or
when the second battery pack (U2) is faulty and the first battery pack (U1) is not faulty, control the second battery pack (U2) to be isolated, control the first contactor (K1), the first positive contactor (F3), the third contactor (K3), and the second negative contactor (F2) to be closed, control the fourth contactor (K4) to be open, control the upper bridge switching unit (171) to be open, and control at least one IGBT component in the lower bridge switching unit (172) to be closed, to charge the first battery pack (U1) through the direct current charging unit (160).

19. The electric vehicle control system (100) according to any one of claims 7 to 18, wherein the control unit is configured to:
when the first battery pack (U1) is faulty, control the first battery pack (U1) to be isolated, and control the first negative contactor (F1) and the fifth contactor (K5) to be closed, to supply power to the drive motor (130) through the second battery pack (U2); or
when the second battery pack (U2) is faulty, control the second battery pack (U2) to be isolated, and control the first positive contactor (F3) and the sixth contactor (K6) to be closed, to supply power to the drive motor (130) through the first battery pack (U1).

20. The electric vehicle control system (100) according to any one of claims 17 to 19, wherein the control unit is configured to:
control the first positive contactor (F3) to be open, to isolate the first battery pack (U1).

21. The electric vehicle control system (100) according to any one of claims 17 to 19, wherein the control unit is configured to:
control the first negative contactor (F1) to be open, to isolate the second battery pack (U2).

22. The electric vehicle control system (100) according to any one of claims 10 to 14, wherein the control unit is configured to:
when neither the first battery pack (U1) nor the second battery pack (U2) is faulty, control a battery pack with a higher state of charge to charge a battery pack with a lower state of charge in the first battery pack (U1) and the second battery pack (U2), to implement state of charge balancing.

23. The electric vehicle control system (100) according to claim 22, wherein the control unit is configured to:
when a state of charge of the second battery pack (U2) is greater than a state of charge of the first battery pack (U1), control the first positive contactor (F3) to be open, control the first negative contactor (F1) and the third contactor (K3) to be closed, control the upper bridge switching unit (171) to be open, and control the lower bridge switching unit (172) to be closed, to charge the first inductor (L1), the second inductor (L2), and the third inductor (L3) through the second battery pack (U2); and
after charging of the first inductor (L1), the second inductor (L2), and the third inductor (L3) ends, control the first positive contactor (F3) and the third contactor (K3) to be closed, control the first negative contactor (F1) to be open, control the upper bridge switching unit (171) to be closed, and control the lower bridge switching unit (172) to be open, to charge the first battery pack (U1) through the first inductor (L1), the second inductor (L2), and the third inductor (L3).

24. The electric vehicle control system (100) according to claim 22 or 23, wherein the control unit is configured to:
when the state of charge of the first battery pack (U1) is greater than the state of charge of the second battery pack (U2), control the first positive contactor (F3), the first contactor (K1), the fourth contactor (K4), and the sixth contactor (K6) to be closed, control the first negative contactor (F1) to be open, control the upper bridge switching unit (171) to be open, and control the lower bridge switching unit (172) to be closed, to charge the first inductor (L1), the second inductor (L2), and the third inductor (L3) through the first battery pack (U1); and
after charging of the first inductor (L1), the second inductor (L2), and the third inductor (L3) ends, control the first positive contactor (F3) to be open, control the first negative contactor (F1), the third contactor (K3), the fifth contactor (K5), and the sixth contactor (K6) to be closed, control the upper bridge switching unit (171) to be closed, and control the lower bridge switching unit (172) to be open, to charge the second battery pack (U2) through the first inductor (L1), the second inductor (L2), and the third inductor (L3).

25. The electric vehicle control system (100) according to any one of claims 22 to 24, wherein before controlling the battery pack with a higher state of charge to charge the battery pack with a lower state of charge in the first battery pack (U1) and the second battery pack (U2), the control unit is further configured to:
control the charging module (120) to charge the battery pack with a higher state of charge in the first battery pack (U1) and the second battery pack (U2), until the battery pack with a higher state of charge in the first battery pack (U1) and the second battery pack (U2) is fully charged.

26. An electric vehicle (200), comprising the electric vehicle control system (100) according to any one of claims 1 to 25.
